# EUROPEAN PATENT APPLICATION

(11) **EP 2 660 699 A1**
(43) Date of publication of application: **06.11.2013**
(21) Application number: 12166520.2
(22) Date of filing: 03.05.2012
(51) Int. Cl.: G06F 3/0488

(54) **Touchscreen keyboard with correction of previously input text**

(30) Priority: 30.04.2012 US 201213459716; 30.04.2012 WO PCT/CA2012/050274
(71) Applicant: BlackBerry Limited, Waterloo, ON N2L 3W8 (CA)
(72) Inventor: Pasquero, Jerome, Waterloo, Ontario N2L 3W8 (CA); Mckenzie, Donald Somerset, Waterloo, Ontario N2L 3W8 (CA); Griffin, Jason Tyler, Waterloo, Ontario N2L 3W8 (CA)
(74) Representative: Moore, Barry

(57) **Abstract**

The present disclosure provides a touchscreen keyboard with correction of previously input text. A method for correcting text input on an electronic device is described. The method comprises: displaying a virtual keyboard on a touchscreen, the virtual keyboard including a plurality of keys; receiving input from the virtual keyboard; displaying received input in an input field displayed on the touchscreen; and deleting a previous set of characters in the input field when a delete touch gesture is detected in association with a designated key in the virtual keyboard.

## Description

### RELATED APPLICATION DATA

The present disclosure relates to commonly owned U.S. patent application no. 13/373,356, filed November 10, 2011, which is incorporated herein by reference in its entirety.

### TECHNICAL FIELD

The present disclosure relates generally to input methodologies for electronic devices, such as handheld electronic devices, and more particularly, to a touchscreen keyboard with correction of previously input text.

### BACKGROUND

Increasingly, electronic devices, such as computers, netbooks, cellular phones, smart phones, personal digital assistants, tablets, etc., have touchscreens that allow a user to input characters into an application, such as a word processor or email application. Character input on touchscreens can be a cumbersome task due to, for example, the small touchscreen area, particularly where a user needs to input a long message.

### BRIEF DESCRIPTION OF THE DRAWINGS

Fig. 1 is an example block diagram of an electronic device, consistent with embodiments disclosed herein.

Fig. 2 is a flowchart illustrating an example method for predicting a selected set of characters, consistent with embodiments disclosed herein.

Figs. 3A, 3B, 3C, and 3D show example front views of a touchscreen, consistent with embodiments disclosed herein.

Figs. 4A and 4B show example front views of a touchscreen, consistent with embodiments disclosed herein.

Fig. 5 shows an example front view of a touchscreen, consistent with embodiments disclosed herein.

Figs. 6A, 6B, and 6C show example front views of a touchscreen, consistent with embodiments disclosed herein.

Fig. 7 shows an example front view of a touchscreen, consistent with embodiments disclosed herein.

Figs. 8A and 8B show example front views of a touchscreen, consistent with embodiments disclosed herein.

Fig. 9 shows an example front view of a touchscreen, consistent with embodiments disclosed herein.

Fig. 10 is a front view of an example of an electronic device in accordance with some examples of the present disclosure.

Fig. 11 illustrates examples of touches on the portable electronic device of Fig. 10.

Fig. 12 is a flowchart illustrating an example method, consistent with embodiments disclosed herein.

Figs. 13A-13C show example front views of a user interface screen including a virtual keyboard displayed on a touchscreen illustrating a delete touch gesture, consistent with embodiments disclosed herein.

Figs. 14A-14L show example front views of a user interface screen including a virtual keyboard displayed on a touchscreen illustrating a delete animation, consistent with embodiments disclosed herein.

### DESCRIPTION OF EXAMPLE EMBODIMENTS

Reference will now be made in detail to various embodiments, examples of which are illustrated in the accompanying drawings. Wherever possible, the same reference numbers will be used throughout the drawings to refer to the same or like parts.

The present disclosure relates to an electronic device, including wired communication devices (for example, a laptop computer having a touchscreen) and mobile or handheld wireless communication devices such as cellular phones, smartphones, wireless organizers, personal digital assistants, wirelessly enabled notebook computers, tablets, and similar devices. The electronic device can also be an electronic device without wireless communication capabilities, such as a handheld electronic game device, digital photograph album, digital camera, or other device.

Basic predictive text input solutions have been introduced for assisting with input on an electronic device. These solutions include predicting which word a user is entering and offering a suggestion for completing the word. But these solutions can have limitations, often requiring the user to input most or all of the characters in a word before the solution suggests the word the user is trying to input. Even then, a user often has to divert focus from the keyboard to view and consider the suggested word displayed elsewhere on the display of the electronic device, and thereafter, look back at the keyboard to continue typing. Refocusing of one's eyes relative to the keyboard while inputting information in an electronic device, particularly when composing large texts, can strain the eyes and be cumbersome, distracting, and otherwise inefficient. Moreover, processing cycles are lost and display power wasted as the processor is idling while the user is focusing attention to the input area, and then back at the virtual keyboard.

The efficiency of predictive text input solutions, from the perspective of both device resources and user experience, sometimes depends on the particular user and the nature of the interaction of the particular user with the touchscreen. Virtual keyboard usage patterns can be broadly categorized as being of two types: "rapid" and "precise". Rapid typists are typically fast two-thumb typists which rely on auto-correction. This usage pattern corresponds most closely with experienced, frequent touchscreen users. Precise typists are typically careful typists who are inclined to use a single finger point to tap keys in the virtual keyboard, and often choose predictions as an input accelerator rather than auto-correction. This usage pattern corresponds most closely with novice/new touchscreen users as well as potentially one-handed (thumb) use situations.

Accordingly, example embodiments described herein permit the user of an electronic device to input characters without diverting attention from the keyboard and subsequently refocusing. Example embodiments described herein also seek to accommodate different user types, such as rapid typists and precise typists, and the different efficiency challenges presented by the different user types.

Use of the indefinite article "a" or "an" in the specification and the claims is meant to include one or more than one of the feature that it introduces, unless otherwise indicated. Thus, the term "a set of characters" as used in "generating a set of characters" can include the generation of one or more than one set of characters. Similarly, use of the definite article "the", or "said," particularly after a feature has been introduced with the indefinite article, is meant to include one or more than one of the feature to which it refers (unless otherwise indicated). Therefore, the term "the generated set of characters" as used in "displaying the generated set of characters" includes displaying one or more generated set of characters. References to orientation contained herein, such as horizontal and vertical, are relative to the screen orientation of a graphical user interface rather than any physical orientation.

In accordance with one embodiment, there is provided a method comprising receiving an input of a character from a virtual keyboard displayed on a display; generating one or more sets of predicted input characters based on the input character; and displaying one or more of the generated sets of predicted input characters.

In accordance with another embodiment, there is provided a method for correcting text input on an electronic device, comprising: displaying a virtual keyboard on a touchscreen, the virtual keyboard including a plurality of keys; receiving input from the virtual keyboard; displaying received input in an input field displayed on the touchscreen; and deleting a previous set of characters in the input field when a delete touch gesture is detected. In some examples, the delete touch gesture is associated with a designated key in the virtual keyboard.

In some examples, the designated key is a "Backspace" key and the delete touch gesture is a back swipe which moves left from the "Backspace" key. In some examples, the back swipe has an initial contact point located in or near the "Backspace" key and a terminal contact point outside of the virtual keyboard. In some examples, the back swipe is a meta-navigation gesture.

In some examples, the designated key is a "Backspace" key and the delete touch gesture is a forward swipe which moves right from the "Backspace" key. In some examples, the forward swipe has an initial contact point located in or near the "Backspace" key and a terminal contact point outside of the virtual keyboard. In some examples, the forward swipe is a meta-navigation gesture.

In some examples, the previous set of characters is a set of characters input via character keys of the virtual keyboard.

In some examples, the previous set of characters is a predicted set of characters selected in response to received input.

In some examples, characters in the previous set of characters which is deleted are sequentially removed from the input field.

In some examples, the method further comprises inserting a previously deleted set of characters in the input field when an undo delete touch gesture is detected. In some examples, the delete touch gesture has a first direction and the undo delete touch gesture has a second direction opposite to the first direction. In some examples, the delete touch gesture is back swipe and the undo delete touch gesture is a forward swipe.

In some examples, the method further comprises displaying an animation in association with the designated key in the virtual keyboard when the delete touch gesture is detected. In some examples, the animation comprises a visual representation of a "Backspace" key displayed within the virtual keyboard proximate to the "Backspace" key which moves across the virtual keyboard in a direction of the delete touch gesture.

In some examples, a size of the visual representation of a "Backspace" key is proportional to a number of characters in the previous set of characters which is deleted.

In some examples, when characters in the previous set of characters which is deleted are sequentially removed from the input field, a size of the visual representation of a "Backspace" key increases with each character in the previous set of characters which is removed from the input field.

In accordance with a further embodiment, there is provided a method for correcting text input on an electronic device, comprising: displaying a virtual keyboard on a touchscreen, the virtual keyboard including a plurality of keys; receiving input from the virtual keyboard; displaying received input in an input field displayed on the touchscreen; and deleting a previous set of characters in the input field when a delete touch gesture is detected, wherein the delete touch gesture has an initial contact point located outside of the virtual keyboard.

In some examples, the initial contact point is located in a non-display area of the touchscreen which surrounds a display area in which the virtual keyboard is displayed.

In some examples, the delete touch gesture is a back swipe with the initial contact point in the non-display area right of the virtual keyboard and moves from left across from the virtual keyboard.

In some examples, the delete touch gesture is a forward swipe with the initial contact point in the non-display area left of the virtual keyboard and moves from right across from the virtual keyboard.

In some examples, the delete touch gesture is a meta-navigation gesture.

In some examples, the delete touch gesture is a back swipe having an initial contact point right of the virtual keyboard and moves from left across from the virtual keyboard.

In some examples, the delete touch gesture is a forward swipe having an initial contact point left of the virtual keyboard and moves from right across from the virtual keyboard.

In some examples, the previous set of characters is a predicted set of characters selected in response to received input.

In some examples, characters in the previous set of characters which is deleted are sequentially removed from the input field.

In some examples, the method further comprises inserting a previously deleted set of characters in the input field when an undo delete touch gesture is detected. In some examples, the delete touch gesture has a first direction and the undo delete touch gesture has a second direction opposite to the first direction. In some examples, the delete touch gesture is back swipe and the undo delete touch gesture is a forward swipe.

In some examples, the method further comprises displaying an animation in association with the designated key in the virtual keyboard when the delete touch gesture is detected. In some examples, the animation comprises a visual representation of a "Backspace" key displayed within the virtual keyboard proximate to the "Backspace" key which moves across the virtual keyboard in a direction of the delete touch gesture.

In some examples, a size of the visual representation of a "Backspace" key is proportional to a number of characters in the previous set of characters which is deleted.

In some examples, when characters in the previous set of characters which is deleted are sequentially removed from the input field, a size of the visual representation of a "Backspace" key increases with each character in the previous set of characters which is removed from the input field.

In accordance with yet a further embodiment, an electronic device is provided that comprises a display having a virtual keyboard displayed thereupon, and a processor. The processor can be configured to perform methods described herein.

In accordance with yet a further embodiment, a keyboard displayed on a display of an electronic device is provided. The keyboard can include a plurality of keys, each key corresponding to one or more different characters of a plurality of characters. The keyboard is configured to perform methods described herein in response to receiving an input.

In accordance with ye a further embodiment, a non-transitory computer-readable storage medium is provided that includes computer executable instructions for performing methods described herein.

These example embodiments, as well as those described below, permit the user of an electronic device to input a set of characters without diverting attention from the virtual keyboard and subsequently refocusing. Predicting and providing various options that the user is likely contemplating, and doing so at appropriate locations on the keyboard, allows the focus to remain on the keyboard, which enhances efficiency, accuracy, and speed of character input.

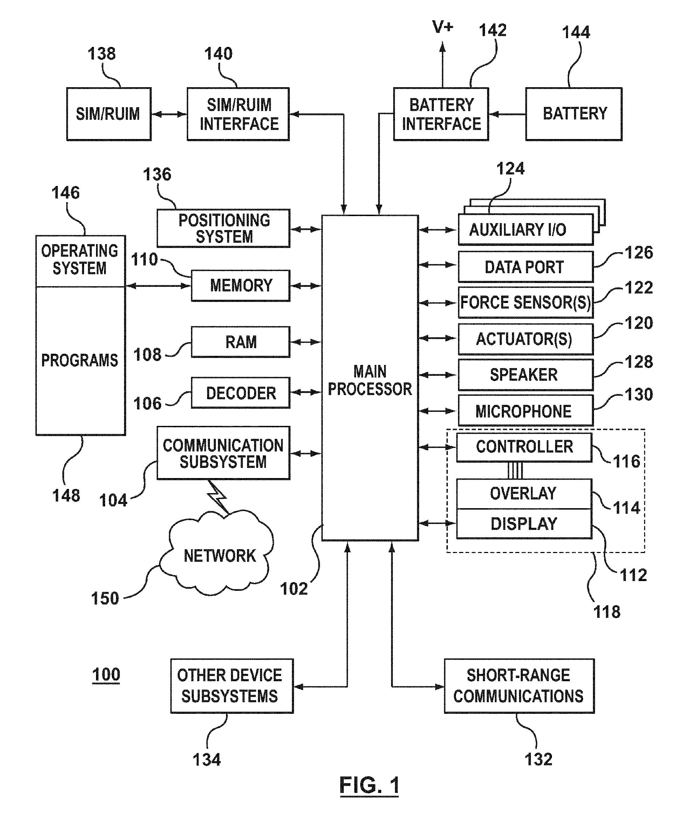

Fig. 1 is a block diagram of an electronic device 100, consistent with example embodiments disclosed herein. Electronic device 100 includes multiple components, such as a main processor 102 that controls the overall operation of electronic device 100. Communication functions, including data and voice communications, are performed through a communication subsystem 104. Data received by electronic device 100 is decompressed and decrypted by a decoder 106. The communication subsystem 104 receives messages from and sends messages to a network 150. Network 150 can be any type of network, including, but not limited to, a wired network, a data wireless network, voice wireless network, and dual-mode wireless networks that support both voice and data communications over the same physical base stations. Electronic device 100 can be a battery-powered device and include a battery interface 142 for receiving one or more batteries 144.

The main processor 102 is coupled to and can interact with additional subsystems such as a Random Access Memory (RAM) 108; a memory 110, such as a hard drive, CD, DVD, flash memory, or a similar storage device; one or more actuators 120; one or more force sensors 122; an auxiliary input/output (I/O) subsystem 124; a data port 126; a speaker 128; a microphone 130; short-range communications 132; other device subsystems 134; and a touchscreen 118.

The touchscreen 118 includes a display 112 with a touch-sensitive overlay 114 connected to a controller 116. User-interaction with a graphical user interface (GUI), such as a virtual keyboard rendered and displayed on the display 112 as a GUI for input of characters, or a web-browser, is performed through touch-sensitive overlay 114. Main processor 102 interacts with touch-sensitive overlay 114 via controller 116. Characters, such as text, symbols, images, and other items are displayed on display 112 of touchscreen 118 via main processor 102. Characters are inputted when the user touches the touchscreen at a location associated with said character.

The touchscreen 118 is connected to and controlled by main processor 102. Accordingly, detection of a touch event and/or determining the location of the touch event can be performed by main processor 102 of electronic device 100. A touch event includes in some embodiments, a tap by a finger, a swipe by a finger, a swipe by a stylus, a long press by finger or stylus, or a press by a finger for a predetermined period of time, and the like.

While specific embodiments of a touchscreen have been described, any suitable type of touchscreen for an electronic device can be used, including, but not limited to, a capacitive touchscreen, a resistive touchscreen, a surface acoustic wave (SAW) touchscreen, an embedded photo cell touchscreen, an infrared (IR) touchscreen, a strain gauge-based touchscreen, an optical imaging touchscreen, a dispersive signal technology touchscreen, an acoustic pulse recognition touchscreen or a frustrated total internal reflection touchscreen. The type of touchscreen technology used in any given embodiment will depend on the electronic device and its particular application and demands.

The main processor 102 can also interact with a positioning system 136 for determining the location of electronic device 100. The location can be determined in any number of ways, such as by a computer, by a Global Positioning System (GPS), either included or not included in electric device 100, through a Wi-Fi network, or by having a location entered manually. The location can also be determined based on calendar entries.

The main processor 102 can also interact with an orientation sensor 197 for sensing the orientation of the device. In some examples, the orientation sensor 197 may be one or more accelerometers. In some examples, the orientation sensor may detect acceleration along multiple orthogonal axes. Main processor 102 can also interact with one or more proximity sensors 198 for detecting the proximity of nearby objects. In some examples, the proximity sensor may be one or more infrared emitter/sensor pairs. The main processor 102 can also interact with an ambient light sensor 199 for detecting the intensity and/or color temperature of ambient light.

In some embodiments, to identify a subscriber for network access, electronic device 100 uses a Subscriber Identity Module or a Removable User Identity Module (SIM/RUIM) card 138 inserted into a SIM/RUIM interface 140 for communication with a network, such as network 150. Alternatively, user identification information can be programmed into memory 110.

The electronic device 100 also includes an operating system 146 and programs 148 that are executed by main processor 102 and are typically stored in memory 110. Additional applications may be loaded onto electronic device 100 through network 150, auxiliary I/O subsystem 124, data port 126, short-range communications subsystem 132, or any other suitable subsystem.

A received signal such as a text message, an e-mail message, or web page download is processed by communication subsystem 104 and this processed information is then provided to main processor 102. Main processor 102 processes the received signal for output to display 112, to auxiliary I/O subsystem 124, or a combination of both. A user can compose data items, for example e-mail messages, which can be transmitted over network 150 through communication subsystem 104. For voice communications, the overall operation of electronic device 100 is similar. Speaker 128 outputs audible information converted from electrical signals, and microphone 130 converts audible information into electrical signals for processing.

### Meta-navigation gestures

Meta-navigation gestures may also be detected by the touchscreen 118. A meta-navigation gesture is a gesture that crosses a boundary between the display area of the touch-sensitive overlay 114 and the outside of the display area of the touch-sensitive overlay 114 (such as a non-display area of the touchscreen 118). In some examples, the meta-navigation gesture has an origin point that is outside the display area of the touch-sensitive overlay 114 and that moves to a position on the display area of the touch-sensitive overlay 114. In other examples, the meta-navigation gesture has an origin point that is inside the display area of the touch-sensitive overlay 114 and that moves to a position outside the display area of the touch-sensitive overlay 114.

Other attributes of the gesture may be detected and be utilized to detect the meta-navigation gesture. Meta-navigation gestures may also include multi-touch gestures in which gestures are simultaneous or overlap in time and at least one of the touches has an origin point that is outside the display area of the touch-sensitive overlay 114 and moves to a position on the inside of display area of the touch-sensitive overlay 114. Thus, two fingers may be utilized for meta-navigation gestures. In other examples, meta-navigation gestures may also include multi-touch gestures in which gestures are simultaneous or overlap in time and at least one of the touches has an origin point that is inside the display area of the touch-sensitive overlay 114 and moves to a position on the outside of the display area of the touch-sensitive overlay 114. Thus, two fingers may be utilized for meta-navigation gestures. Further, multi-touch meta-navigation gestures may be distinguished from single touch meta-navigation gestures and may provide additional or further functionality.

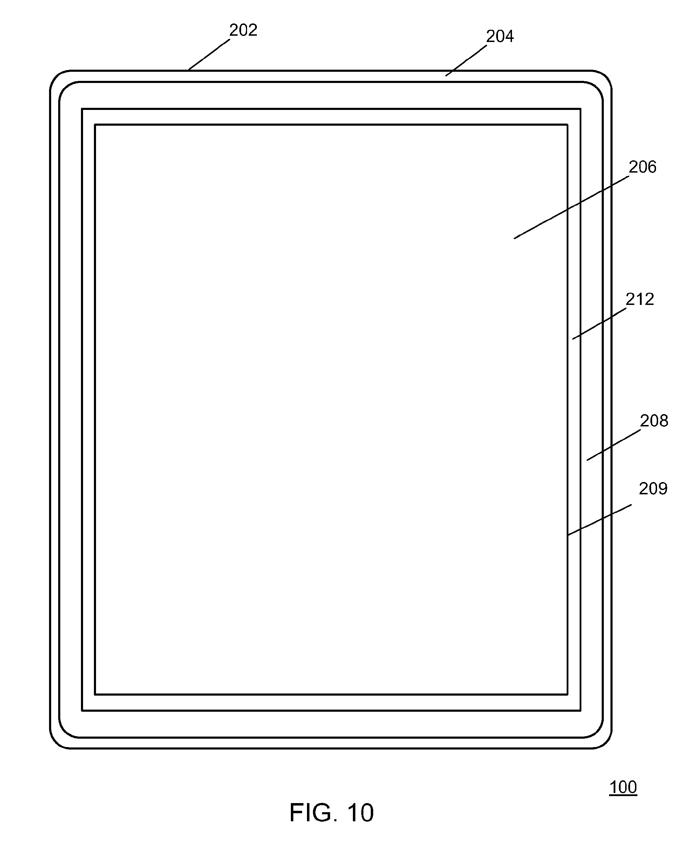

Fig. 10 shows a front view of an example of the electronic device 100. The portable electronic device 100 includes a housing 202 that encloses components such as shown in Fig. 1. The housing 202 may include a back, sidewalls, and a front 204 that frames the touchscreen 118. In the example of Fig. 10, the touchscreen 118 is generally centered in the housing 202 such that a display area 206 of the display 112 is generally centered with respect to the front 204 of the housing 202. A non-display area 208 of the touch-sensitive overlay 114 extends around the display area 206. In some examples, the width of the non-display area is 4 mm.

For the purpose of the present example, the touch-sensitive overlay 114 extends to cover the display area 206 and the non-display area 208. Touches on the display area 206 may be detected and, for example, may be associated with displayed selectable features. Touches on the non-display area 208 may be detected, for example, to detect a meta-navigation gesture. Alternatively, meta-navigation gestures may be determined by both the non-display area 208 and the display area 206. The density of touch sensors may differ from the display area 206 to the non-display area 208. For example, the density of nodes in a mutual capacitive touchscreen, or density of locations at which electrodes of one layer cross over electrodes of another layer, may differ between the display area 206 and the non-display area 208.

Touch gestures received on the touchscreen 118 may be analyzed based on the attributes to discriminate between meta-navigation gestures and other touches, or non-meta navigation gestures. Meta-navigation gestures may be identified when the touch gesture crosses over a boundary near a periphery of the display 112, such as a boundary 209 between the display area 206 and the non-display area 208. In the example of Fig. 10, the origin point of a meta-navigation gesture on the touchscreen 118 may be determined utilizing the area of the touch-sensitive overlay 114 that covers the non-display area 208.

A buffer region 212 or band that extends around the boundary 209 between the display area 206 and the non-display area 208 may be utilized such that a meta-navigation gesture is identified when a touch has an origin point outside the boundary 209 and the buffer region 212 and crosses through the buffer region 212 and over the boundary 209 to a point inside the boundary 209 (i.e., in the display area 206). Although illustrated in Fig. 10, the buffer region 212 may not be visible. Instead, the buffer region 212 may be a region around the boundary 209 that extends a width that is equivalent to a predetermined number of pixels, for example. Alternatively, the boundary 209 may extend a predetermined number of touch sensors or may extend a predetermined distance from the display area 206. The boundary 209 may be a touch-sensitive region or may be a region in which touches are not detected.

Touch gestures that have an origin point in the buffer region 212, for example, may be identified as non-meta navigation gestures. Optionally, data from such touch gestures may be utilized by an application as a non-meta navigation gesture. Alternatively, data from such touch gestures may be discarded such that touches that have an origin point on the buffer region 212 are not utilized as input at the portable electronic device 100.

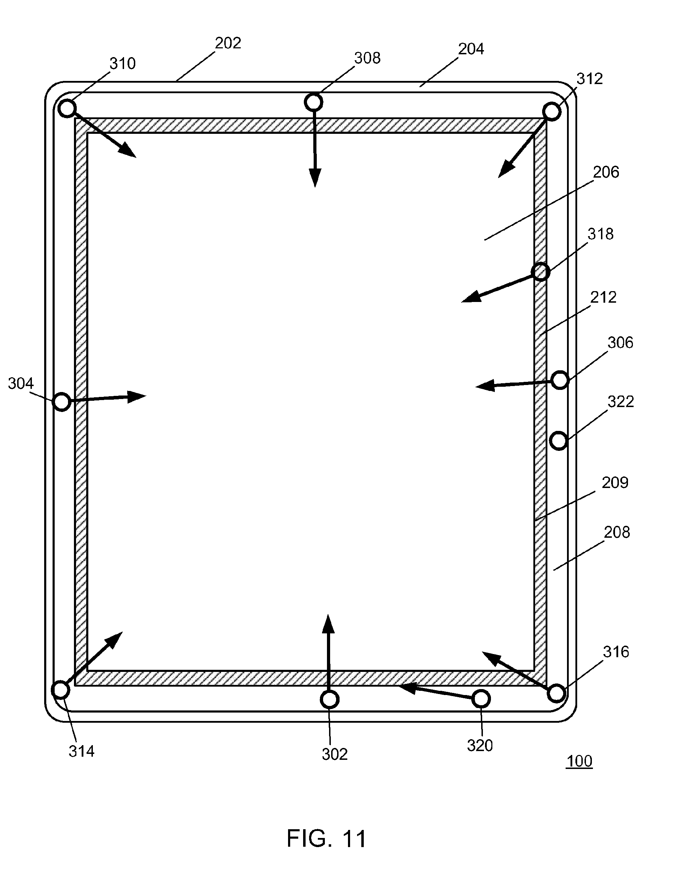

Fig. 11 illustrates examples of touches on the touchscreen 118. The buffer region 212 is illustrated in Fig. 11 by hash markings for the purpose of explanation. As indicated, the buffer region 212 may not be visible to the user. For the purpose of explanation, touches are illustrated by circles at their points of origin. Arrows extending from the circles illustrate the paths of the touches that are touch gestures.

The touch 302 begins at the origin point outside the boundary 209 and the outside the buffer region 212. The path of the touch 302 crosses the buffer region 212 and the boundary 209 and is therefore identified as a meta-navigation gesture. Similarly, the touches 304, 306, 308, 310, 312, 314, 316 each have origin points outside the boundary 209 and the buffer region 212 and their paths cross the buffer region 212 and the boundary 209. Each of the touches 304, 306, 308, 310, 312, 314, 316 is therefore identified as a meta-navigation gesture. However, the touch 318 has an origin point that falls within the buffer region 212 and the touch 318 is therefore not identified as a meta-navigation gesture. The touch 320 begins at an origin point outside the boundary 209 and the buffer region 212. However, the path of the touch 320 does not cross the boundary 209 and is therefore not identified as a meta-navigation gesture. The touch 322 also has an origin point outside the boundary 209 and the buffer region 212 but is not a touch gesture and therefore does not cross the boundary 209 and is not identified as a meta-navigation gesture.

### Text Prediction

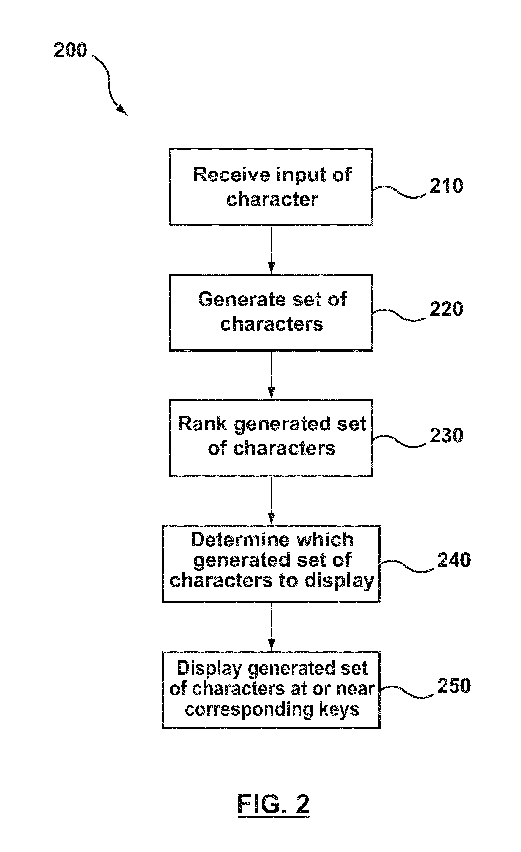

Fig. 2 is a flowchart illustrating an example method 200 for predicting a set of characters, consistent with example embodiments disclosed herein. As used herein, a predictor (such as a predictive algorithm, program or firmware) includes a set of instructions that when executed by a processor (for example, main processor 102), can be used to disambiguate for example, received ambiguous text input and provide various options, such as a set of characters (for example, words or phrases, acronyms, names, slang, colloquialisms, abbreviations, or any combination thereof) that a user might be contemplating. A predictor can also receive otherwise unambiguous text input and predict a set of characters potentially contemplated by the user based on several factors, such as context, frequency of use, and others as appreciated by those skilled in the field. The predictor may predict a set of characters which completes a received text input (known as auto-completion), correct received text input (known as auto-correction), or a combination thereof (e.g., completing the text input while correcting previously entered text input).

For example, in the predictor is a program 148 residing in memory 110 of electronic device 100. Accordingly, method 200 includes a predictor for generating a set of characters corresponding to a subsequent candidate input character based on inputted characters. It can be appreciated that while the example embodiments described herein are directed to a predictor program executed by a processor, the predictor can be executed by a virtual keyboard controller.

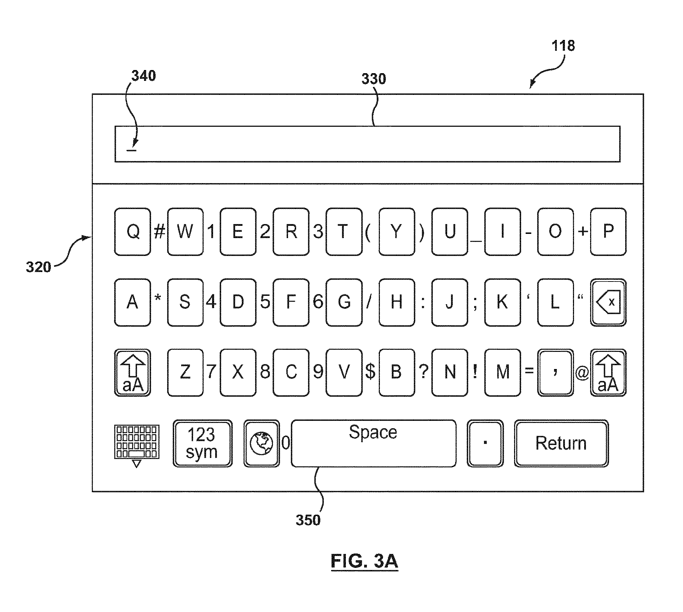

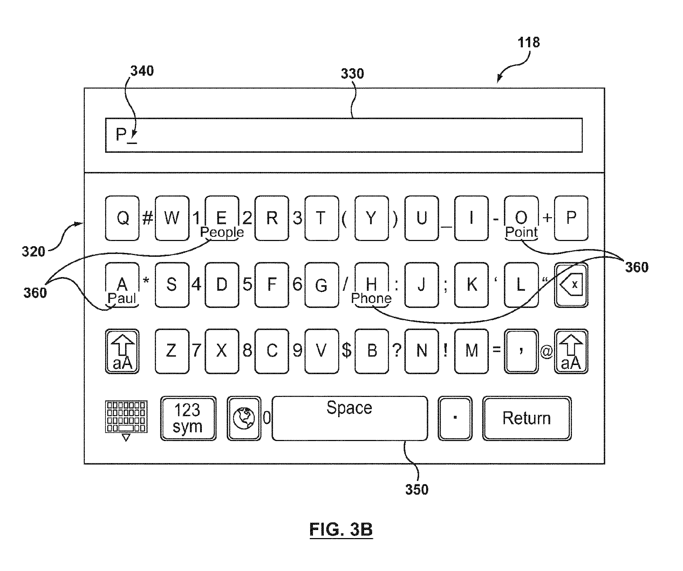

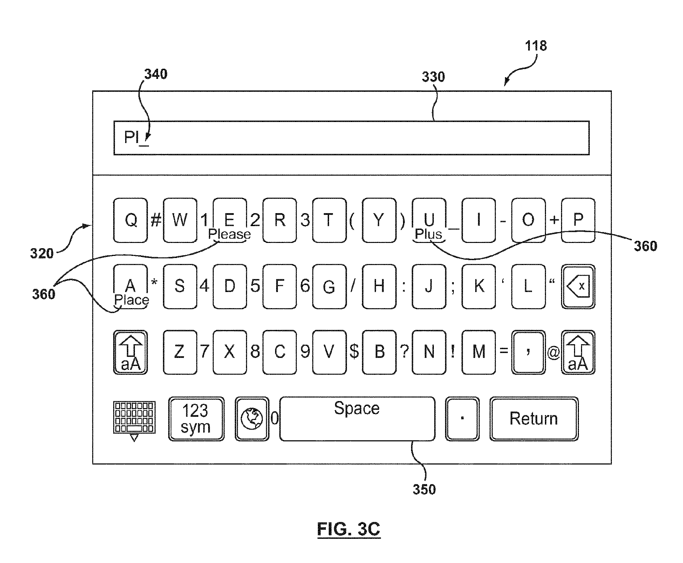

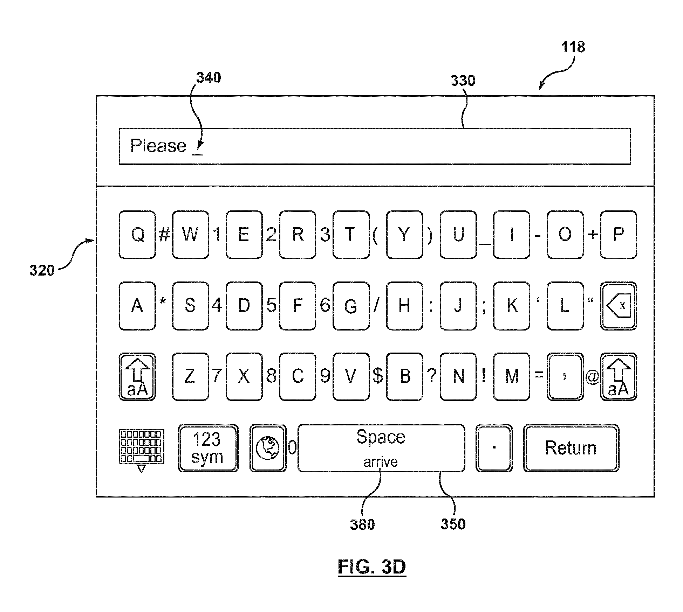

Method 200 begins at block 210, where the processor receives an input of one or more characters from a virtual keyboard displayed on a touchscreen. As used herein, however, a character can be any alphanumeric character, such as a letter, a number, a symbol, a punctuation mark, and the like. The inputted character can be displayed in an input field (for example, input field 330 further described below in Figs. 3-9) that displays the character the user inputs using the virtual keyboard.

At block 220, the processor generates one or more sets of characters such as words or phrases, acronyms, names, slang, colloquialisms, abbreviations, or any combination thereof based on the input received in block 210. The set of characters includes, for example, a set of characters that are stored in a dictionary (for example, a word or an acronym) of a memory of the electronic device, a set of characters that were previously inputted by user (for example, a name or acronym), a set of characters based on a hierarchy or tree structure, a combination thereof, or any set of characters that are selected by a processor based on defined arrangement.

In some embodiments, the processor can use contextual data for generating a set of characters. Contextual data considers the context of characters in the input field. Contextual data can include information about, for example, set of characters previously inputted by the user, grammatical attributes of the characters inputted in the input field (for example, whether a noun or a verb is needed as the next set of characters in a sentence), or any combination thereof. For example, if the set of characters "the" has already been inputted into display, the processor can use the contextual data to determine that a noun-instead of a verb-will be the next set of characters after "the". Likewise, if the set of characters "Guy Lafleur played in the National Hockey" was inputted, based on the context, the processor can determine the subsequent set of characters is likely "League". Using the contextual data, the processor can also determine whether an inputted character was incorrect. For example, the processor can determine that the inputted character was supposed to be a "w" instead of an "a", given the proximity of these characters on a QWERTY virtual keyboard.

Processor 102 can also include an affix as part of the set of characters, such as an adverb ending, an adjective ending, different verb tenses, and the like, or any other change to make a complete set of characters. Processor 102 can also use the received input to generate affixes, such as plural endings or plural forms. Any known predictive technique or software can be used to process the received input and the contextual data in generating set of characters at block 220.

In some example embodiments, the set of characters generated at block 220 can begin with the same character received as input at block 210. For example, if the characters "pl" have been received as input using a virtual keyboard, these characters will be received by the processor as the input. In these embodiments, the set of characters generated at block 220 would all begin with "pl", such as "please" or °'plot." There is no limit on the length of a generated set of characters. Regarding affixes, if the user has input the characters "child", for example, the affixes generated at block 220 could include "-ren", to make the set of characters "children", or "-ish", to make the set of characters "childish".

In some example embodiments, the set of characters generated at block 220 can simply include the same characters received as input at block 210. For example, if the received input is an "x," the processor may generate "example" or "xylophone" as the set of characters. Such sets of characters can be generated using the contextual data.

In another example embodiment, if input has not been received or a delimiter (such as a <SPACE>) has been used, the generated set of characters can be placed on subsequent candidate input characters that correspond to the first letter of the generated set of characters.

Next, at block 230, the generated set of characters from block 220 can be ranked. The rankings reflect the likelihood that a candidate set of characters might have been intended by the user, or might be chosen by a user compared to another candidate set of characters.

In some embodiments, contextual data can be included in the ranking at block 230. In some embodiments, the electronic device can be configured to rank nouns or adjectives higher based on the previous inputted set of characters. If the inputted set of characters is suggestive of a noun or adjective, the processor, using the contextual data, can rank the nouns or adjectives corresponding to what the user is typing higher at block 230. In an additional embodiment, set of characters including adjective affixes (such as "-ish" or "-ful"), phrases, plurals, or combinations thereof can also be ranked. Contextual data can increase the likelihood that the higher ranked generated set of characters is intended by a user. In some embodiments, contextual data can include information about which programs or applications are currently running or being used by a user. For example, if the user is running an email application, then set of characters associated with that user's email system, such as set of characters from the user's contact list, can be used to determine the ranking. N-grams, including unigrams, bigrams, trigrams, and the like, can be also used in the ranking of the sets of characters. Alternatively, the geolocation of the electronic device or user can be used in the ranking process. If, for example, the electronic device recognizes that a user is located at his/her office, then sets of characters generally associated with work can be ranked higher in the list. If, on the other hand, the device determines a user is at the beach, then sets of characters generally associated with the beach can be ranked higher in the list.

At block 240, the processor determines which of the set of characters to display based on the ranking. For example, higher ranked sets of characters are more likely to be determined that they should be displayed. A ranker (such as a ranking algorithm, program or firmware) includes a set of instructions that when executed by a processor (for example, main processor 102), can be executed to determine ranking in this regard. In some embodiments, the ranker is a program 146 residing in memory 110 of electronic device 100.

At block 250, the determined set of characters is displayed at a location on the keyboard corresponding to a subsequent candidate input character, predicted as the next character in a word that the user might input. For instance, if a user inputs "pl", the word "please" would be displayed on the key for the letter "e"-the subsequent candidate input character for that word. Similarly, the word "plus" would also be displayed on the key for the letter "u"-another subsequent candidate input character. The subsequent candidate input character can be any alphanumeric character, such as a letter, number, symbol, punctuation mark, and the like.

In some embodiments, the generated set of characters is displayed at or near keys on the virtual keyboard associated with the subsequent candidate input characters. Its placement at or near a key can depend, for instance, on the size of the word or the number of nearby subsequent candidate input characters and the size of their associated set of characters.

The set of characters can be displayed in a manner that will attract the user's attention. In some embodiments, a displayed set of character's appearance can be enhanced or changed in a way that makes the set more readily visible to the user. For example, displayed sets of characters can be displayed with backlighting, highlighting, underlining, bolding, italicizing, using combinations thereof, or in any other way for making the displayed set of characters more visible.

When identifying the set of characters for display at block 240, the processor can limit the displayed set of characters to the top few or choose among the higher ranked sets of characters. For example, if two sets of characters are both ranked high, and these sets of characters would otherwise be displayed at the same key, the electronic device could be configured to display only the highest ranked generated set of characters. In other embodiments, both sets of characters could be displayed at or around the same key, or one set of characters is displayed at one key while the second set of characters is displayed at another key. In some example embodiments, the processor can take into account the display size to limit the number of generated sets of characters.

In some embodiments, the ranking could be used to choose between two or more sets of characters that, when displayed on adjacent subsequent candidate input characters, would overlap with each other (e.g., because of their respective lengths). In such a scenario, the electronic device could be configured to display the higher ranked set of characters on the keyboard. For example, if the set of characters "establishment" is ranked first in a list generated at block 240 after the letter "E" is inputted, "establishment" could be displayed at the "S" key. When displayed on a virtual keyboard, however, its length might occupy some space on the "A" key and the "D" key, potentially blocking a set of characters that would be displayed on or around those keys. At block 240, it could be determined that "establishment" would be displayed fully, and no other set of characters would be placed at the "A" or "D" keys ahead of the first ranked set of characters "establishment." An alternative to displaying only the top ranked set of characters would be to use abbreviations or recognized shortened forms of the set of characters, effectively permitting a long set of characters to be displayed within or mostly within the boundaries of a single key simultaneously with other sets of characters on adjacent keys of a virtual keyboard.

Figures 3A-9 illustrate a series of example front views of the touchscreen 118 having a virtual keyboard 320, consistent with example embodiments disclosed herein. Starting with Fig. 3A, touchscreen 118 includes a virtual keyboard 320 that is touch-sensitive. The position of the virtual keyboard 320 is variable such that virtual keyboard 320 can be placed at any location on touchscreen 118. Touchscreen 118 could be configured to detect the location and possibly pressure of one or more objects at the same time. Touchscreen 118 includes two areas: (1) an input field 330 that displays characters after a user has inputted those characters and (2) the virtual keyboard 320 that receives the input from the user. As described throughout this disclosure, a virtual keyboard displays a set of characters at a location on the keyboard corresponding to a subsequent candidate input character that might be received as input from the user.

The examples and embodiments illustrated in Figures 3-9 can be implemented with any set of characters, such as words, phrases, acronyms, names, slang, colloquialisms, abbreviations, or any combination thereof.

As shown in Fig. 3A, touchscreen 118 displays a standard QWERTY virtual keyboard 320; however, any conventional key configuration can be displayed for use in the device, such as AZERTY, QWERTZ, or a layout based on the International Telecommunication Union (ITU) standard (ITU E.161) having "ABC" on key 2, "DEF" on key 3, and so on. Virtual keyboard 320 includes space key 350 as well as other keys that can provide different inputs, such as punctuation, letters, numbers, enter or return keys, and function keys. While virtual keyboard 320 is shown as having a square shape, it can have any other shape (such as an arch).

As shown in Fig. 3A, touchscreen 118 displays input field 330, which displays the characters the user inputs using virtual keyboard 320. Input field 330 includes a cursor 340, which can be an underscore (as shown) or any other shape, such as a vertical line. Cursor 340 represents the character space where a next inputted character, selected character, or selected set of characters will be inserted.

As shown in Fig. 3B, when a user inputs a character (in this example, "P"), this character is displayed in input field 330 and cursor 340 moves to the character space where the next inputted character or word will be inserted. After the character is inputted, a predictor (such as, a predictive algorithm or a circuit) can generate set of characters 360 (for this embodiment) that all begin with the character "P", or characters if more than one character is input. The generated set of characters are displayed at a location on the keyboard corresponding to a subsequent candidate input character that might be received as input from the user. As mentioned, generated set of characters 360 can be displayed at or near the key corresponding to the subsequent candidate input characters (for example, under the respective A, E, H, and O keys of the virtual keyboard 320). Indeed, slightly shifting the display location of the generated set of characters can address overcrowding of subsequent candidate input characters, effectively permitting more set of characters to be displayed.

In the example shown in Fig. 3B, "P" is received as input and a predictor generates several set of characters 360, which are displayed at keys corresponding to each generated set of characters' subsequent candidate input character. As shown in Fig. 3B, "People" is placed at the "E" key because the next letter after "P" of "People" is "E"; "Paul" will be place at the "A" key because the next letter after "P" of "Paul" is "A"; "Phone" will be placed at the "H" key because the next letter after "P" of "Phone" is "H"; and so on. It should be noted that any of the letters in the set of characters can be upper case or lower case.

In the embodiment shown in Fig. 3C, "L" is next input received by touchscreen, and a predictor determines several generated set of characters 360, which are displayed at a key corresponding to subsequent candidate input characters (for example, under the respective A, E, and U keys of the virtual keyboard 320), for the current position of cursor 340, which is in the third character position, as shown in input field 330. In another embodiment, a generated set of characters 360 can be presented such as to include the subsequent candidate input character. For example, the set of characters "Please" can be displayed so that the characters "PI" are displayed before the "E" character on the "E" key, and the characters "ase" can be placed after the "E" character on the "E" key. Further, in this or other embodiments, the displayed "E" can be presented in a manner that differs from the "PI" and "ase", thereby enabling the user to still recognize it as the "E" key while also making it readily visible so that the user can either input the generated set of characters "Please" or input the character "E". The "E" can be capitalized or in lowercase. In other embodiments, an affix can be displayed at the key. Using the example of the set of characters "Please" above, the "ase" could be displayed at the "E" key so the set of characters fragment "-ease" or "-Ease" would appear.

If the user inputs a generated set of characters, that set of characters is placed in input field 330. This can be seen in Fig. 3D, where the user has inputted generated set of characters "Please," resulting in its placement in the input field. A space is inserted after the set of characters if the user wants to input a new set of characters. A user could input a generated set of characters in various ways, including in a way that differs from a manner of inputting a character key. For example, to input a generated set of characters, a user could use a finger or stylus to swipe the generated set of characters. As used herein, swiping includes swiping the set of characters itself or swiping or touching near the set of characters. For the latter embodiment, the device can detect a swipe or touch near a set of characters, be it a generated set of characters or a predicted set of characters (to be described below), and through the use of a predictor, determine the set of characters the user intended to input. In another embodiment, the user could press a key for a predetermined period of time, such as a long press. That key can be, for example, the key corresponding to the subsequent candidate input character of the set of characters. So, if the set of characters "Please" is intended to be inputted instead of "E", the electronic device 100 can be configured to require that the "E" key be pressed for a predetermined period of time to trigger the input of "Please".

After a generated set of characters 360 has been determined, as shown in Fig. 3D, a predicted set of characters 380 can be displayed, shown here at space key 350. Predicted set of characters 380 can differ from generated set of characters 360 (as shown in Figs. 3A-3C) and is the system's attempt to predict the next set of characters a user might be contemplating. A predictor is used to determine predicted set of characters 380. As with displayed generated set of characters 360, predicted set of characters 380 can be received as input in any number of ways, including receiving a swiping of the predicted set of characters with a finger or stylus or receiving a pressing of a key (such as the space key or another designated key) for a predetermined period of time (long press).

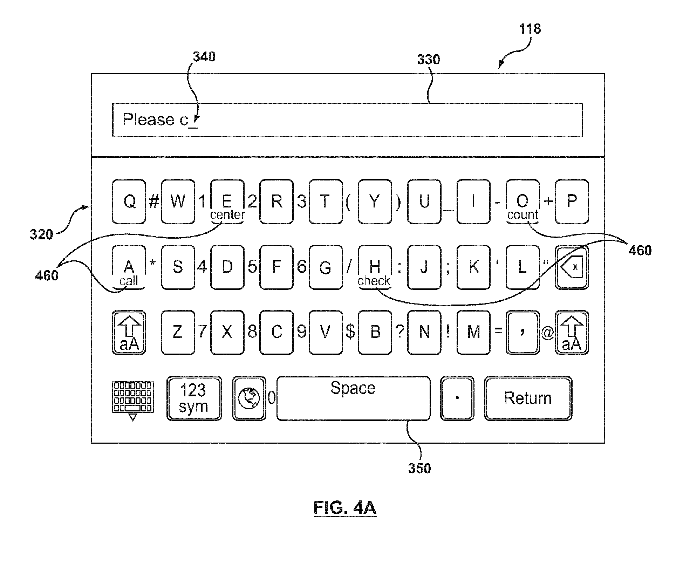

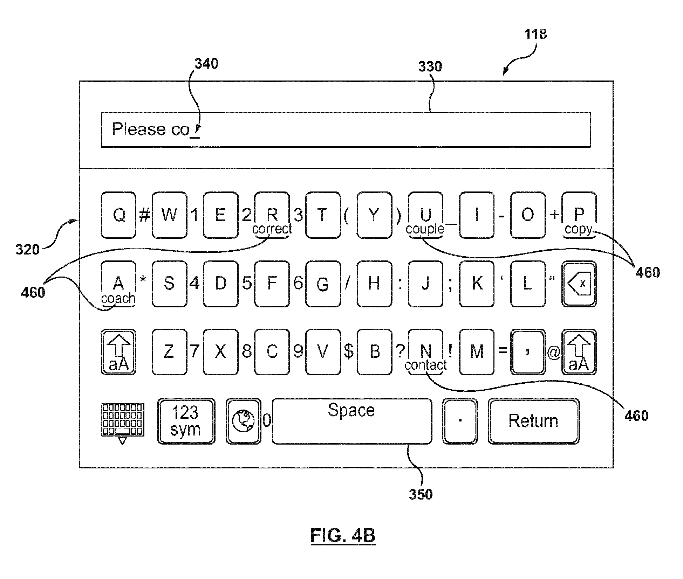

In Fig. 4A, electronic device 100 receives "C" as input from virtual keyboard 320. Again, a predictor determines generated set of characters 460 based in part on the received input. In Fig. 4B, electronic device 100 receives "O" as input from the virtual keyboard and outputs the "O" in input field 330. As shown in Fig. 4A, the set of characters "count" was displayed at the "O" key after the input of the "C" character was received. Since the "O" key was pressed in a manner to only input the "O" character, as shown in Fig. 4B, an "O" is displayed as second character of the currently inputted set of characters, and the set of characters "count" is not inputted by the user. Alternatively, if a user wanted to input the generated set of characters "count," the user can input the "O" key in Fig. 4A in a manner different from a manner of inputting the "O" key, such as by swiping the set of characters "count" or by a long press on the "O" key, as opposed to tapping. Returning to Fig. 4B, after the "O" is inputted, generated set of characters 460 are displayed at the keys corresponding to subsequent candidate input characters, as shown in Fig. 4B.

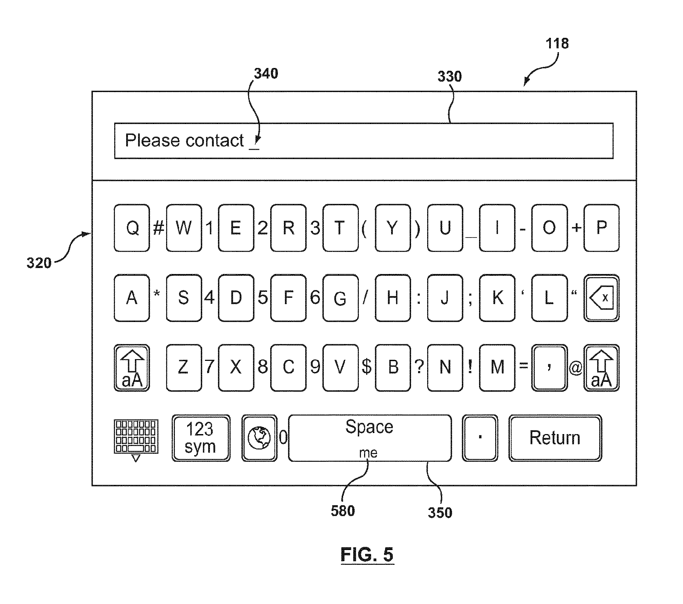

Fig. 5 shows input field 330 displaying the set of characters "contact" followed by a space. In that instance, the user inputted the generated set of characters "contact" 460 as was shown in Fig. 4B at the "N" key. Referring back to Fig. 5, a <SPACE> character is now automatically inserted after the generated word in the input field. Predicted word "me" 580 is now displayed on space key 350.

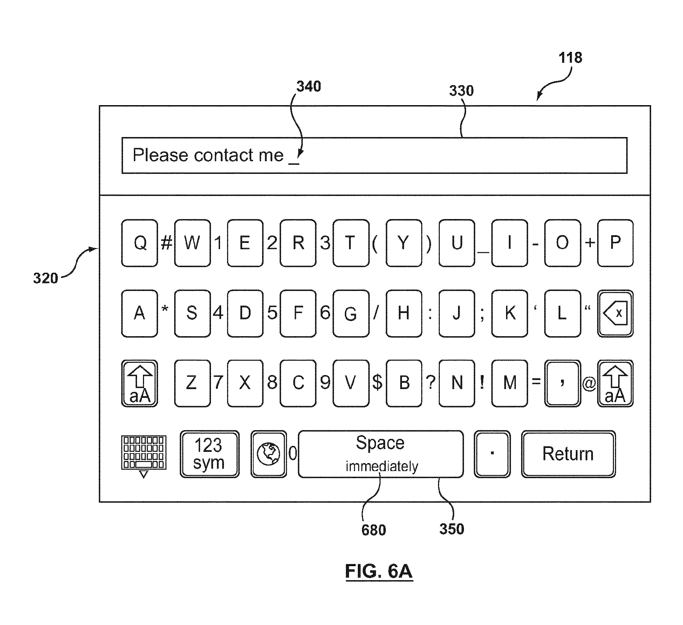

If the predicted word "me" 580 is received as input, the word "me" 580 is then displayed in input field 330 followed by a space as shown in Fig. 6A, which then shows predicted word 680 "immediately" displayed on space key 350. The predicted word is presented after a completed word and space have been displayed in input field 330.

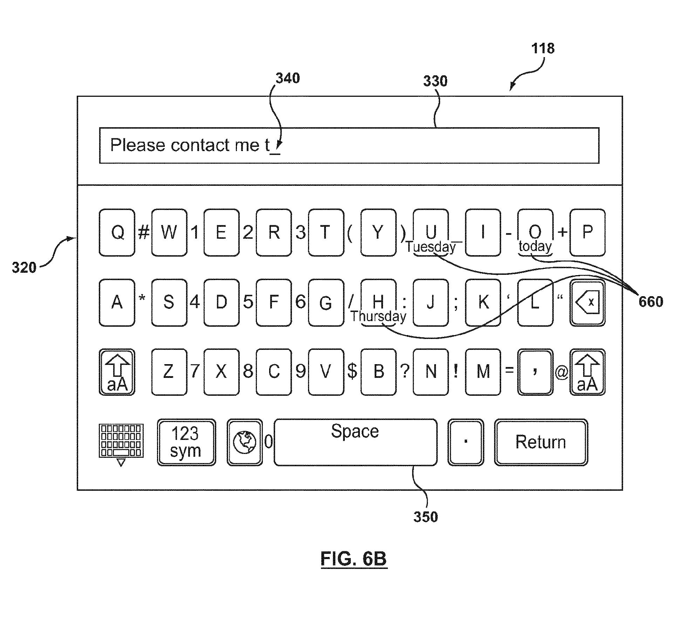

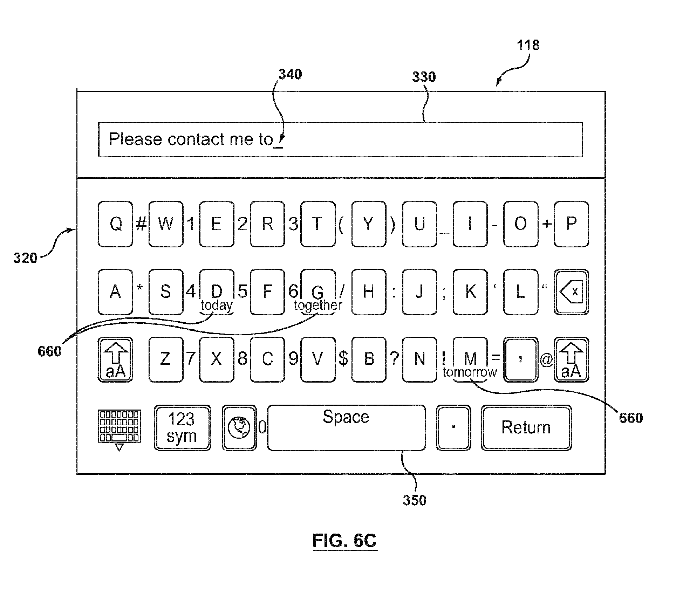

Fig. 6B shows an example where touchscreen 118 has received the "T" character as input after the user has pressed the "T" key. In this scenario, touchscreen 118 displays a "t" in input field 330. Generated set of characters 660 (for example, "Tuesday," "today," and "Thursday") are displayed at the keys of the subsequent candidate input characters. Fig. 6C shows an example where electronic device 100 has received the "o" character as input after the user presses the "O" key instead of inputting generated set of characters 660 "today" as was shown in Fig. 6B. Thus, "o" is now displayed in input field 330.

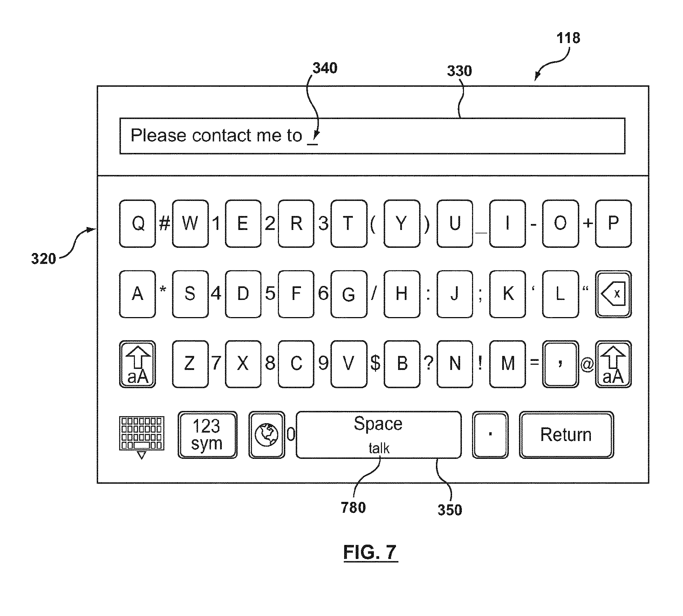

Fig. 7 shows an example where touchscreen 118 has received the <SPACE> character as input after the user selects the space key. In this scenario, touchscreen 118 inserts a <SPACE> character, and then displays predicted set of characters "talk" 780 at space key 350.

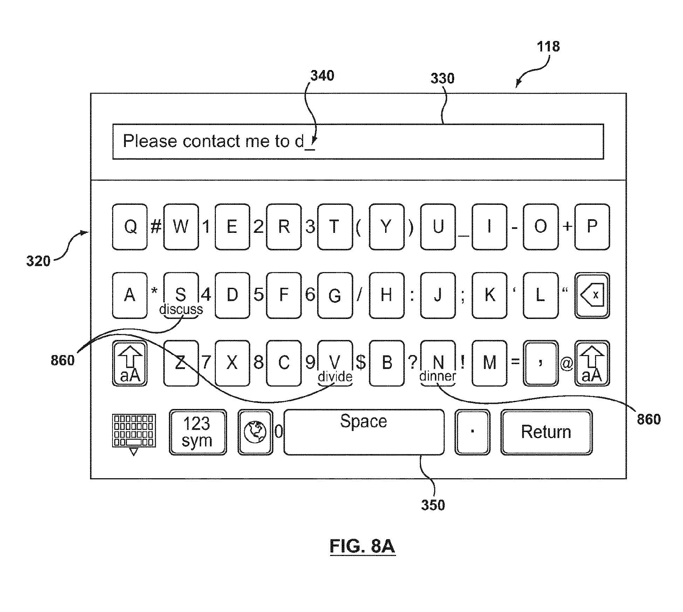

Fig. 8A shows an example where touchscreen 118 has received the "d" character as input after the user presses the "D" key. In this scenario, touchscreen 118 displays a "d" in the input field 330 and displays generated set of characters "discuss," "divide," and "dinner" 860 on keys corresponding to subsequent candidate input characters. In this example embodiment, while the character "I" was never received as input, electronic device 100 determined that generated set of characters "discuss," "divide," and "dinner" 860 were the set of characters to be displayed on touchscreen. In this embodiment, because each of these set of characters has "i" as its second letter, touchscreen 118 displayed generated set of characters using a further subsequent letter in the set of characters (for example, "discuss" under the "S" key, "divide" under the "V" key, and "dinner" under the "N" key). In other embodiments, generated set of characters "discuss," "divide," and "dinner" 860 can be displayed at or near the "I" key.

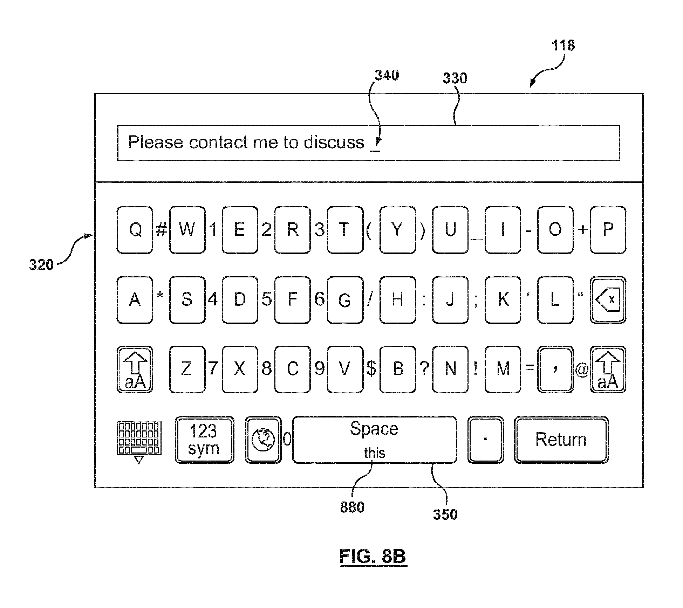

Fig. 8B shows an example where touchscreen 118 has received the set of characters "discuss" as input after the user chooses generated set of characters "discuss" 860. In this example, touchscreen 118 displays predicted set of characters "this" 880 at space key 350.

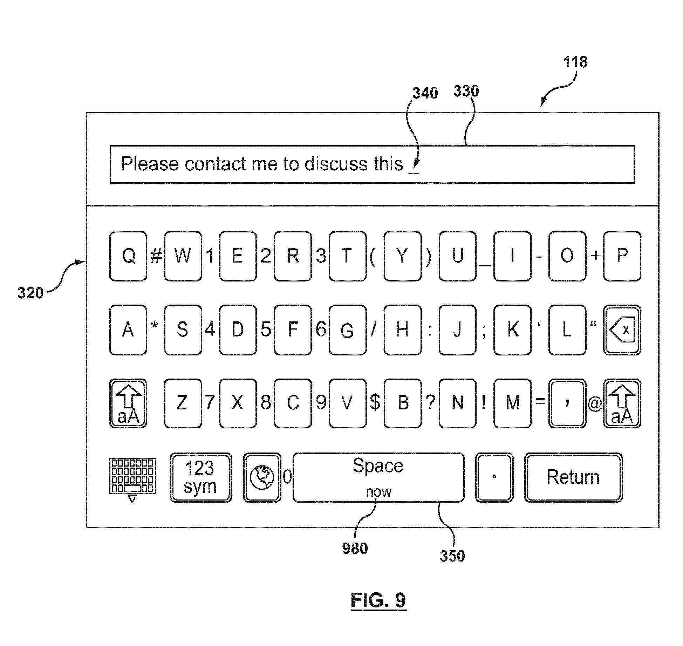

Fig. 9 shows an example where touchscreen 118 receives the "this" set of characters as input after user selects "this" as a desired predicted set of characters 880. In this example, touchscreen 118 displays predicted set of characters "now" 980 at space key 350.

Touchscreen 118 can also receive punctuation as input at any time during the typing of a message. If a user decides to use punctuation after inputting either a generated set of characters or a predicted set of characters, the <SPACE> character (for example, the <SPACE> character prior to cursor 940 of Fig. 9) is deleted and the inputted punctuation is inserted.

### Correction of Previously Input Text

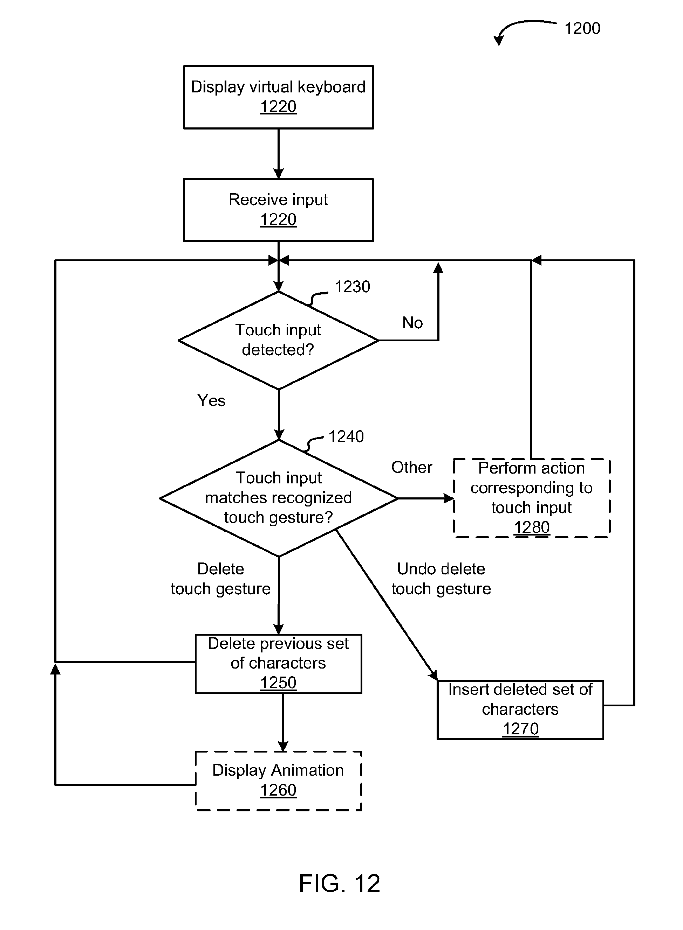

Fig. 12 is a flowchart of a method 1200 for configuring a virtual keyboard rendered and displayed on a display of an electronic device 100 in accordance with one example embodiment of the present disclosure. The method 1200 may be carried out, at least in part, by firmware or software executed by the processor 102. Coding of software for carrying out such a method 1200 is within the scope of a person of ordinary skill in the art provided in the present disclosure. The method 1200 may contain additional or fewer processes than shown and/or described, and may be performed in a different order. Computer-readable code executable by the processor 102 to perform the method 1200 may be stored in a computer-readable medium such as the memory 110.

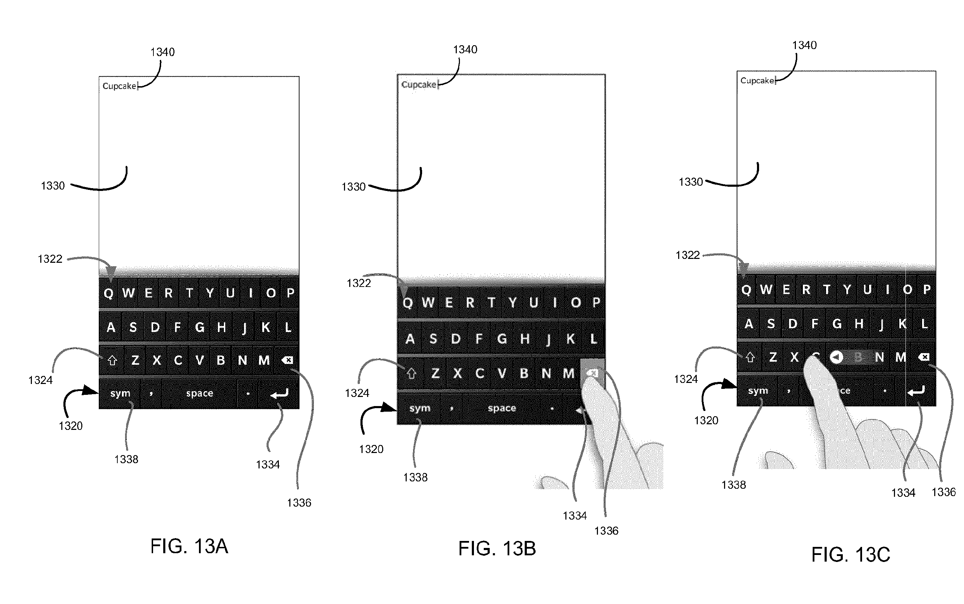

At 1210, a virtual keyboard (such as the virtual keyboard 1320 shown in Fig. 13A) is rendered and displayed on the touchscreen 118. The virtual keyboard 1320 may be displayed automatically when an input field of a text entry mode is displayed, or may be called or invoked, for example, in response to corresponding input (such as activation of a keyboard button or icon). The virtual keyboard 1320 includes a plurality of keys including a plurality of character keys 1322 as previously described. Each key in the plurality of character keys 1322 corresponds to a character in an input character set. The input character set, in at least some examples, is an English alphabetic or alphanumeric character set. The plurality of character keys are arranged in a familiar QWERTY layout as shown in the example of Fig. 13A, but may be arranged in another suitable format in other examples.

The virtual keyboard 1320, in the shown example, is displayed below an input field 1330 for displaying characters input using the virtual keyboard 1320 and predicted text selected in response to received input. The input field 1330 includes a cursor (also known as a caret) 1340 which can be a vertical line (as shown) or any other shape, such as an underscore as mentioned previously. The virtual keyboard 1320 also includes non-character keys such as a "Shift" key 1324, a "Backspace" key 1334, an "Enter" key 1336 and a "Symbol" key 1338 with the label "123@!&" in the shown example. The "Symbol" key 1338 invokes an alternative virtual keyboard having an alternative input character set which comprises number and/or symbols.

At 1220, the processor 102 receives input such as a character from a virtual keyboard displayed on the touchscreen 118. As used herein, a character can be any alphanumeric character, such as a letter, a number, a symbol, a punctuation mark, and the like. The received input, such as an input character, is displayed in the input field 1330 further described below in connection with Fig. 13A.

In some examples, a predictor may determine and display one or more predicted sets of characters which the user may be contemplating based at least in part on the received input for a current position of the cursor 1340 within the current word (or other set of characters). The current word is the word within the input field 1330 in which the cursor 1340 is currently located. As noted above, words are separated by a delimiter character, such as a <SPACE> character. The predicted sets of characters may include words or phrases, acronyms, names, slang, colloquialisms, abbreviations, or any combination thereof based on the input received. The predicted set of characters may be determined by the predictor from a dictionary stored in a memory of the electronic device 100, a set of characters that were previously input (for example, a name or acronym), a set of characters based on a hierarchy or tree structure, a combination thereof, or any set of characters that are selected by the processor 102 based on defined arrangement.

The processor 102 may receive input which select a predicted set of characters as input (i.e., to accept the autocomplete and/or autocorrect prediction). The input may be a swipe, a tap or hold at or near a designated key (such as the spacebar or "Enter" key), a swipe, tap or hold at or near the displayed predicted set of characters, other touch gesture or other received input. A predicted set of characters which is selected in response to the received input is displayed in the input field 1330 along with characters, such as set of characters, input via character keys 1322 of the virtual keyboard 1320, to collectively define an input string in the input field 1330. Accordingly, the text input in the input field 1330 grows with each character input via the virtual keyboard 1320 and each selected predicted sets of characters. The text input in the input field 1330 may include a number of set of characters.

At 1230, the electronic device 100 and/or touchscreen 118 monitors to detect touch inputs or touch events, in particular a designated delete touch gesture, for deleting a previous set of characters. The electronic device 100 and/or touch-sensitive display 118 typically also monitor for other touch gestures at the same time. In some examples, the delete touch gesture is performed at a designated key in the virtual keyboard 1320, as described more fully below.

At 1240, the electronic device 100 and/or touchscreen 118 determines whether the touch input matches a recognized touch gesture.

At 1250, a previous set of characters (e.g., word) in the input field 1330 is deleted when a delete touch gesture is detected. The previous set of characters which is deleted may be a previous word and a delimiter character (e.g., leading <SPACE> character) in front of that word. As noted above, a previous word is typically separated from a current word by a delimiter character, such as a <SPACE> character. The current word is the word within the input field 1330 in which the cursor 1340 is currently located.

As noted above, when the previous set of characters was input from a predicted set of characters suggested by the predictor, a delimiter character is inserted after the set of characters. Thus, deleting the delimiter character along with the previous set of characters in such examples is appropriate. Typically, it is also appropriate that the delimiter character be deleted when the previous set of characters was manually input via character keys 1322 of the virtual keyboard 1320. However, there may exist instances when deleting the delimiter character is not appropriate. Accordingly, it is contemplated that the source of the previous set of characters may be tracked and the delimiter character may or may not be deleted when the previous set of characters was manually, depending on applied settings.

Alternatively, the previous set of characters which is deleted may be the characters of the current word. Alternatively, the previous set of characters which is deleted may one or more delimiter characters (e.g., <SPACE> characters) in front of the previous word, i.e. trailing before/behind the cursor 1340). In some examples, when more than one delimiter character is front of the previous words, all additional delimiter characters are deleted so that only a single delimiter character is present and separating the previous word from the current word. In other examples, each delimiter character is deleted individually. Accordingly, a distinct delete touch gesture is required to delete each delimiter character.

In some examples, the previous set of characters is deleted when the delete touch gesture is detected in association with a designated key in the virtual keyboard 1320. In some examples, the delete touch gesture only deletes a previous set of characters when the previous set of characters is a set of characters input via character keys 1322 of the virtual keyboard 1320. In other examples, the delete touch gesture only deletes a previous set of characters when the previous set of characters is a predicted set of characters selected in response to received input. In yet other examples, the delete touch gesture deletes a previous set of characters when the previous set of characters is either a set of characters input via character keys 1322 of the virtual keyboard 1320 or a predicted set of characters selected in response to received input.

Examples of the delete touch gesture will now be described. The delete touch gesture, in at least some examples, is a directional or moving touch gesture. In some examples, the delete touch gesture is associated with a designated key in the virtual keyboard 1320. In shown example of Figs. 13A to 14L, the designated key is the "Backspace" key 1334. In other examples, the delete touch gesture may be more generally defined such as any touch gesture which moves in a designated direction (e.g., right-to-left) and has a distance or length which exceeds a threshold distance (e.g., 2-3 cm across the touchscreen 118 in terms of physical distance, or 300 pixels in pixel distance) and optionally has a duration which is less than a threshold duration (e.g., 1 second, ½ second, etc.) In yet other examples, the delete touch gesture may be more specifically defined or may be defined differently, as described more fully below.

The delete touch gesture, in some examples, is a back swipe which moves left from the "Backspace" key. The back swipe has an initial contact point ("start") at a location associated with (within or near) the designated key (e.g., "Backspace" key). The back swipe may have a final contact point ("end") inside of the virtual keyboard 1320, outside of the virtual keyboard 1320, or either the inside or outside of the virtual keyboard 1320 depending on the example. The final contact point may be located in the non-display area 208 of the touch-sensitive overlay 114 which surrounds the display area 206 in which the virtual keyboard 1320 is displayed.

The delete touch gesture, in other examples, is a forward swipe which moves left from the "Backspace" key. The forward swipe has an initial contact point located in or near the "Backspace" key. The forward swipe may have a final contact point inside of the virtual keyboard 1320, outside of the virtual keyboard 1320, or either the inside or outside of the virtual keyboard 1320 depending on the example. The final contact point may be located in the non-display area 208 of the touchscreen 118 which surrounds the display area 206 in which the virtual keyboard 1320 is displayed.

When the final contact point of the delete touch gesture (e.g., a back swipe or forward swipe) is outside of the virtual keyboard 1320, the delete touch gesture may be, but is not necessarily, a meta-navigation gesture having the final contact point located in a non-display area 208 outside of the display area 206. However, it will be appreciated that the virtual keyboard 1320 need not span the entire width of the display area 206 of the touchscreen 118. Accordingly, one or both of the initial contact point or final contact point may be located outside of the virtual keyboard 1320 while remaining within the display area 206. In such examples, the delete touch gesture is not a meta-navigation gesture.

In other examples, the delete touch gesture is not associated with a designated key but instead has an initial contact point located outside of the virtual keyboard 1320. This increases the area available for initiating the delete touch gesture, facilitating the user of the delete touch gesture. The initial contact point may be located outside of the virtual keyboard 1320 but within the display area 206 or in the non-display area 208 of the touchscreen 118 which surrounds the display area 206. The delete touch gesture, in some examples, may be a back swipe with the initial contact point in the non-display area 208 right of the virtual keyboard 1320 and moves from left across from the virtual keyboard 1320. Alternatively, the initial contact point may be in the display area 206 right of the virtual keyboard 1320.

The delete touch gesture, in other examples, is a forward swipe with the initial contact point in the non-display area 208 left of the virtual keyboard 1320 and moves from right across from the virtual keyboard 1320. Alternatively, the initial contact point may be in the display area 206 left of the virtual keyboard 1320.

At 1260, a delete animation is optionally displayed following detection of the delete touch gesture. The deletion animation may be displayed when the user's lifts his or her finger from the touchscreen 118 after completing the delete touch gesture. In some examples, the animation has a duration of less than 1 second (e.g., 800 milliseconds).

At 1270, a previously deleted set of characters (e.g., word) is input or inserted in the input field 1330 when an undo delete touch gesture is detected. In at least some examples, the undo delete touch gesture is only recognized and available immediately after a previous set of characters has been deleted. For example, after other touch input is detected, such as character input, the undo delete command is no longer available. In some examples, the undo delete touch gesture is only recognized and available immediately for threshold duration after a previous set of characters has been deleted.

When the delete touch gesture is a directional or moving touch gesture, the undo delete touch gesture may be a directional or moving touch gesture opposite to the delete touch gesture. That is, in some examples, the delete touch gesture has a first direction and the undo delete touch gesture has a second direction opposite to the first direction. In some examples, the delete touch gesture is a back swipe which moves right-to-left, for example starting from the "Backspace" key, and the undo delete touch gesture is a forward swipe which moves left-to-right, for example starting anywhere on the virtual keyboard 1320. This provides a very intuitive, easy to perform, easy to remember gesture-command combination, which lends itself to discoverability, and which can be differentiated from other gestures by users and the electronic device 100 and/or touchscreen 118.

Returning to block 1240, if the touch input does not correspond to the delete touch gesture, the electronic device 100 may perform an action corresponding to the touch input at 1280. For example, when the delete touch gesture is a swipe, a touch or tap on a character key 1332 may input a character corresponding to the touched or tapped character key 1332 in the input field 1330. If the touch input does not correspond to other input, no action is performed.

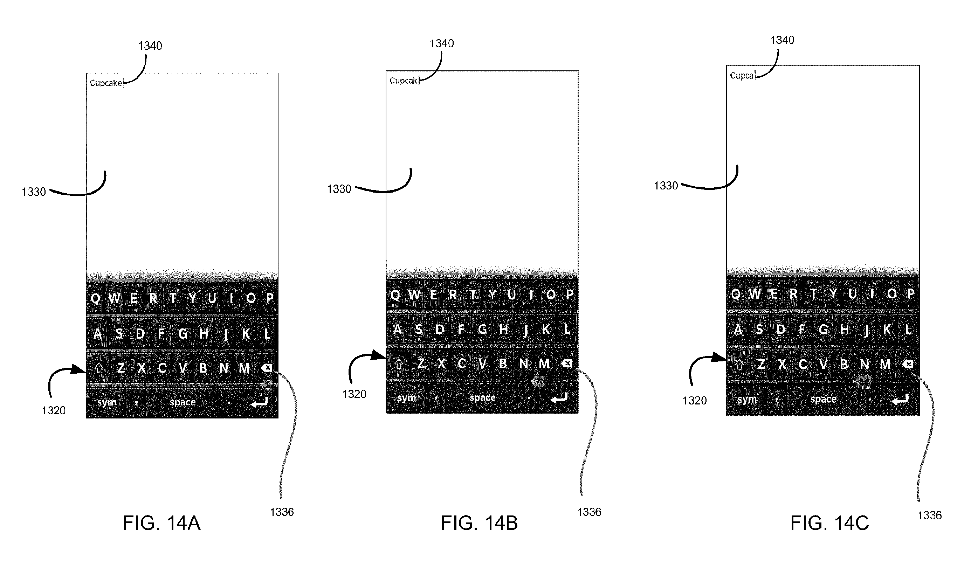

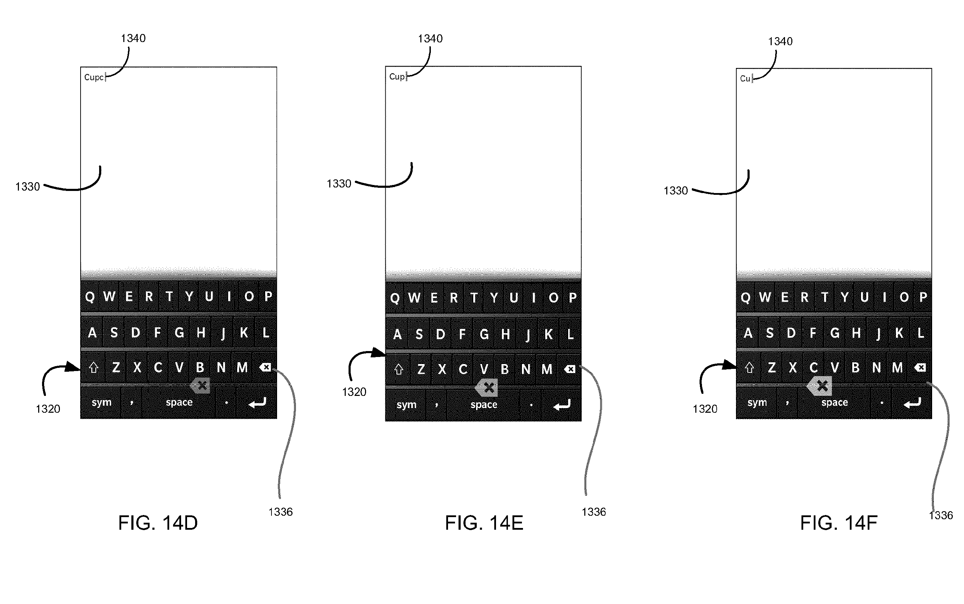

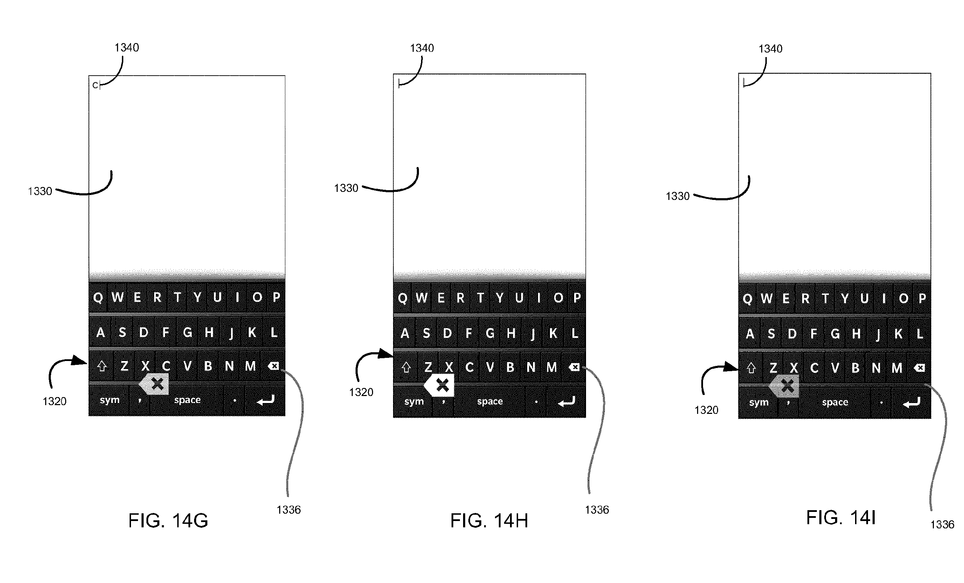

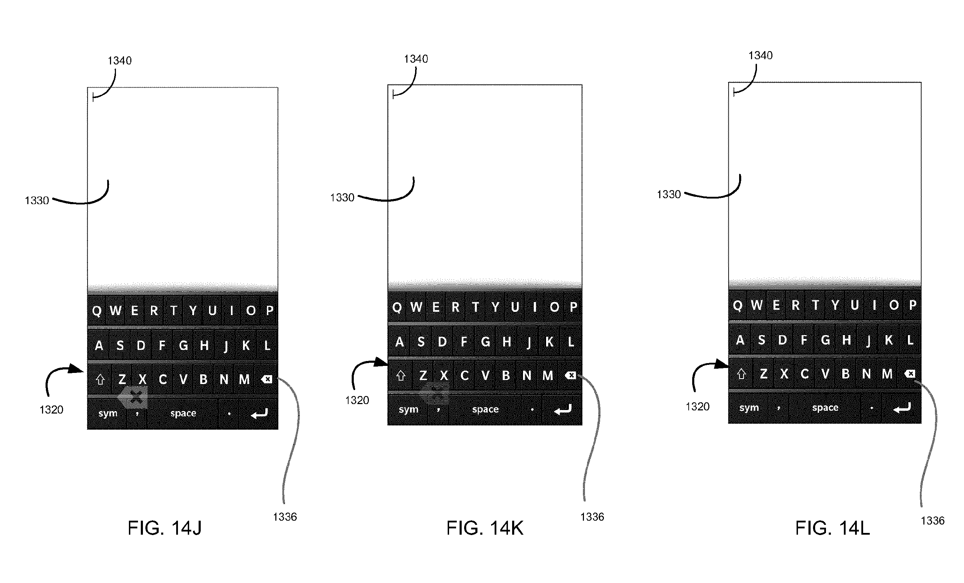

Referring now to Fig. 14A-14L, an example of the delete animation which may be displayed at 1260 is illustrated. For example, the deletion animation may be displayed when the user's lifts his or her finger from the touchscreen 118 after completing the delete touch gesture. In some examples, the animation has a duration of less than 1 second (e.g., 800 milliseconds).

In Fig. 14A, the set of characters "Cupcake " is displayed in the input field 1330 immediately before the cursor 1340. The set of characters "Cupcake " may be a set of characters input via character keys 1322 of the virtual keyboard 1320 or a predicted set of characters selected in response to received input. The set of characters "Cupcake" is identified by the processor 102 as a previous set of characters (e.g., word) using the current position of the cursor 1340 relative to the set of characters "Cupcake, as mentioned previously.

As best shown in Fig. 14A to 14G, in some examples, characters in the previous set of characters which is deleted are sequentially removed from the input field 1330. In the shown example, the <SPACE> character (" ") followed by the letters "E", "K", "A", "C", "P", "U" and "C" are sequentially removed from the input field 1330. In other examples, the previous set of characters may be removed all at once. For the purpose of the present example, the removal of the characters in the previous set of characters is not part of the animation although it occurs concurrently with the animation. In other examples, the removal of the characters in the previous set of characters may be part of the animation. The sequential removal of the previous set of characters simulates the injection of the backspace character and provides improved visual feedback to the user that the deletion has occurred. This visual feedback may assist the user in detecting unintentional deletions, which may go unnoticed if the previous set of characters is removed all at once. Early detection of unintentional deletions facilities text entry and the reduction in errors in the resultant text. Moreover, the sequential removal of the previous set of characters provides a visual effect that is less abrupt and more visually appealing to device users than if the previous set of characters is removed all at once.

In the shown example, the animation is displayed in detected in association with the designated key (e.g., "Backspace" key 1334) in the virtual keyboard 1320. As part of the animation, a visual representation of the "Backspace" key is displayed within the virtual keyboard 1320 proximate to the "Backspace" key 1334. The visual representation of the "Backspace" key moves across the virtual keyboard 1320 in a direction of the delete touch gesture (for example, right to left in the direction of a back swipe in the shown example). In the shown example, the visual representation of the "Backspace" key is located below the "Backspace" key 1334, in particular, in a separator (or spacer) bar between the row of the virtual keyboard 1320 in which the "Backspace" key 1334 is located and the row below it. In other examples, the visual representation of the "Backspace" key may be located above the "Backspace" key 1334, such as in a spacer bar between the row of the virtual keyboard 1320 in which the "Backspace" key 1334 is located and the row above it.

In some examples, the visual representation of the "Backspace" key progressively increases in prominence during at least part of the animation, for example, as the visual representation of the "Backspace" key moves across the virtual keyboard 1320. In the shown example, the visual representation starts at first size with a first level of transparency and progressively increases in size to a second size and concurrently decreases in transparency to second level of transparency (or until it is no longer transparent). The change in transparency is sometime referred to as fading-in (increasing transparency) and fading-out (decreasing transparency). The increase in prominence (e.g., increase in size and decrease in transparency) during the animation may be relative (e.g., proportional) to the number of characters in the previous set of characters which is deleted (e.g. the length of the previous set of characters). The increase in prominence provides a visual cue or hint regarding the number of characters being deleted.

In some examples, the visual representation of the "Backspace" key may increases in prominence up to a point in the animation at which time the visual representation of the "Backspace" key progressively decreases in prominence until it disappears completely. In the shown example, the visual representation of the "Backspace" key progressively increases in prominence as it moves across the virtual keyboard 1320. The visual representation of the "Backspace" key may begin to progressively decrease in prominence when it reaches the far side of the virtual keyboard 1320 as a transition visual effect.

In other examples, rather than displaying the delete animation following detection of the delete touch gesture, the delete animation may be displayed while the delete touch gesture is being performed, for example, in a manner which tracks a position of the delete touch gesture, typically in accordance with a position of a centroid of the touch input.

The above-described combination of gesture-action assignments is believed to have potential advantages in several respects, particularly with regards to providing a more natural interaction with the electronic device 100. Providing more natural interaction with the electronic device 100 involves identifying efficient gestures which are relatively easy to perform, relatively easy to remember, have discoverability which allows users to "discover" functions during normal use without formal training, and which can be differentiated from other gestures by users (and by the device) relatively easily. Arbitrary or poorly considered gesture-action assignments tend to create awkward and unnatural user experiences which make the required interaction harder to perform, harder to remember, undiscoverable (or at least less discoverable), and harder to differentiate from other gestures by users.

The above-described combination of gesture-action assignments are believed to be relatively easy to perform, relatively easy to remember, have discoverability which allows users to "discover" functions during normal use without formal training, and which can be differentiated from other gestures by users (and by the device) relatively easily.

While the various methods of the present disclosure have been described in terms of functions shown as separate blocks in the Figures, the functions of the various blocks may be combined during processing on an electronic device. Furthermore, some of the functional blocks in the Figures may be separated into one or more sub steps during processing on an electronic device.

While the present disclosure is described, at least in part, in terms of methods, a person of ordinary skill in the art will understand that the present disclosure is also directed to the various components for performing at least some of the aspects and features of the described methods, be it by way of hardware components, software or any combination of the two, or in any other manner. Moreover, the present disclosure is also directed to a pre-recorded storage device or other similar computer readable medium including program instructions stored thereon for performing the methods described herein.

The present disclosure may be embodied in other specific forms without departing from the subject matter of the claims. The described example embodiments are to be considered in all respects as being only illustrative and not restrictive. The present disclosure intends to cover and embrace all suitable changes in technology. The scope of the present disclosure is, therefore, described by the appended claims rather than by the foregoing description. All changes that come within the meaning and range of equivalency of the claims are intended to be embraced within their scope.

## Claims

1. A method for correcting text input on an electronic device, comprising:
displaying a virtual keyboard on a touchscreen, the virtual keyboard including a plurality of keys;
receiving input from the virtual keyboard;
displaying received input in an input field displayed on the touchscreen; and
deleting a previous set of characters in the input field when a delete touch gesture is detected in association with a designated key in the virtual keyboard.

2. The method of claim 1, wherein the designated key is a "Backspace" key and the delete touch gesture is a back swipe which moves left from the "Backspace" key.

3. The method of claim 2, wherein the back swipe has an initial contact point located in or near the "Backspace" key and a terminal contact point outside of the virtual keyboard.

4. The method of claim 1, wherein the designated key is a "Backspace" key and the delete touch gesture is a forward swipe which moves right from the "Backspace" key.

5. The method of claim 4, wherein the forward swipe has an initial contact point located in or near the "Backspace" key and a terminal contact point outside of the virtual keyboard.

6. The method of any one of claims 1 to 5, wherein the previous set of characters is a set of characters input via character keys of the virtual keyboard.

7. The method of any one of claims 1 to 5, wherein the previous set of characters is a predicted set of characters selected in response to received input.

8. The method of any one of claims 1 to 7, wherein characters in the previous set of characters which is deleted are sequentially removed from the input field.

9. The method of any one of claims 1 to 8, further comprising:
inserting a previously deleted set of characters in the input field when an undo delete touch gesture is detected.

10. The method of claim 9, wherein the delete touch gesture has a first direction and the undo delete touch gesture has a second direction opposite to the first direction.

11. The method of claim 10, wherein the delete touch gesture is back swipe and the undo delete touch gesture is a forward swipe.

12. An electronic device, comprising:
a processor;
a touchscreen coupled to the processor;
wherein the processor is configured to: display a virtual keyboard on the touchscreen, the virtual keyboard including a plurality of keys; receiving input from the virtual keyboard; displaying received input in an input field displayed on the touchscreen; and deleting a previous set of characters in the input field when a delete touch gesture is detected, wherein the delete touch gesture has an initial contact point located outside of the virtual keyboard.

13. The electronic device of claim 12, wherein the initial contact point is located in a non-display area of the touchscreen which surrounds a display area in which the virtual keyboard is displayed.

14. The electronic device of claim 12 or claim 13, wherein the delete touch gesture is a back swipe with the initial contact point in the non-display area right of the virtual keyboard and moves from left across from the virtual keyboard, or
wherein the delete touch gesture is a forward swipe with the initial contact point in the non-display area left of the virtual keyboard and moves from right across from the virtual keyboard.

15. The electronic device of claim 10, wherein the delete touch gesture is a back swipe having an initial contact point right of the virtual keyboard and moves from left across from the virtual keyboard, or
wherein the delete touch gesture is a forward swipe having an initial contact point left of the virtual keyboard and moves from right across from the virtual keyboard.
